# EUROPÄISCHE PATENTSCHRIFT

(11) **EP 3 754 226 B1**
(45) Veröffentlichungstag und Bekanntmachung des Hinweises auf die Patenterteilung: **09.11.2022**
(21) Anmeldenummer: 20180047.1
(22) Anmeldetag: 15.06.2020
(51) Int. Cl.: F16H 37/08, F16H 47/04, F16H 3/08

(54) **LASTSCHALTGETRIEBE**
POWER SHIFT TRANSMISSION
BOÎTE DE VITESSES À COMMANDE SOUS CHARGE

(30) Priorität: 19.06.2019 DE 102019208948
(43) Veröffentlichungstag der Anmeldung: 23.12.2020
(73) Patentinhaber: Deere & Company, Moline, IL 61265 (US)
(72) Erfinder: Billich, Manuel, 68163 Mannheim (DE)
(74) Vertreter: Dehnhardt, Florian Christopher

(56) Entgegenhaltungen:
- EP-A2- 0 818 643
- EP-A2- 1 626 206
- DE-A1-102008 015 276
- DE-A1-102016 205 933
- US-A1- 2003 036 451

## Beschreibung

Die Erfindung betrifft ein Lastschaltgetriebe, insbesondere ein stufenlos schaltbares Lastschaltgetriebe, mit einer Eingangs- und einer parallel dazu angeordneten Ausgangswelle, wobei eine Verzweigungseinheit auf der Eingangswelle angeordnet ist, über die ein auf die Eingangswelle wirkendes Drehmoment auf zwei Leistungspfade zur Drehmomentübertragung aufteilbar ist, wobei in dem ersten Leistungspfad eine zumindest zwei Schaltstufen aufweisende Schaltgruppe und in dem zweiten Leistungspfad ein Drehmomentwandler angeordnet ist, wobei über die Schaltgruppe und über den Drehmomentwandler ein Drehmoment von der Eingangs- auf die Ausgangswelle übertragen werden kann.

Stufenlos schaltbare Lastschaltgetriebe sind grundsätzlich aus dem Stand der Technik bekannt. So beschreibt beispielsweise die DE 23 35 629 A1 ein Lastschaltgetriebe, bei dem mittels einer Planetenstufe ein Antriebsmoment über einen mechanischen und über einen nicht-mechanischen Leistungspfad auf eine Ausgangswelle übertragen werden kann. Die mechanische Drehmomentübertragung wird hierbei in Form von Zahnradpaaren realisiert, die entsprechend unter- oder übersetzt sein können. Als nicht-mechanischer Antriebspfad dient eine Hydraulikeinheit bestehend aus einer Hydraulikpumpe und einem Hydraulikmotor. Die Hydraulikpumpe wird von der Antriebswelle angetrieben und erzeugt dementsprechend einen Druck in der Hydraulikflüssigkeit. Dieser Druck wird dazu genutzt, den Hydraulikmotor anzutreiben, der wiederum mit der Ausgangswelle in Verbindung steht. Die Hydraulikeinheit ist in diesem Zusammenhang als Drehmomentwandler ausgebildet, wobei eine Einstellung des zu übertragenden Drehmomentes über eine Einstellung des Ventilhubes der Hydraulikpumpe und/oder des Hydraulikmotors erfolgt. Eine Schaltbarkeit über den mechanischen Leistungspfad ist nicht vorgesehen, sodass allein der nicht-mechanische Leistungspfad für eine Änderung bzw. Anpassung der Drehmomentübertragung verantwortlich ist.

Die DE 103 19 252 A1 zeigt ebenfalls ein Lastschaltgetriebe mit einem mechanischen Leistungspfad und einem nicht-mechanischen Leistungspfad, wobei der nicht-mechanische Leistungspfad entweder über eine Hydraulikeinheit oder eine Elektronikeinheit gebildet werden kann, wobei eine Elektronikeinheit entsprechend aus einem Generator und einem Elektromotor besteht. Auch hier erfolgt eine Leistungsverzweigung mittels einer Planetenstufe, wobei im Gegensatz zu dem zuvor beschriebenen Lastschaltgetriebe eine Übertragung von dem Antriebsmoment auf die Ausgangswelle einzig über den mechanischen Leistungspfad erfolgen kann. Der nicht-mechanische Leistungspfad ist lediglich dazu vorgesehen, einen gewissen Anteil des Drehmomentes aufzunehmen. Eine Übertragung des Drehmomentes auf die Ausgangswelle kann mittels zweier Schalteinheiten vorgesehen sein, wobei diese beiden Schalteinheiten sich durch das Unter- bzw. Übersetzungsverhältnis voneinander unterscheiden.

Ferner ist aus der DE 10 2016 205 933 A1 ein Leistungsverzweigungsgetriebe bekannt, das eine Eingangswelle sowie eine dazu parallel verlaufende Abtriebswelle aufweist, wobei die Eingangswelle mit einem Planetenträger eines Planetengetriebes verbunden ist. Dies ermöglicht die Aufteilung eines eingangsseitigen Drehmoments auf zwei Leistungszweige, einen hydrostatischen Leistungszweig einerseits und einen mechanischen Leistungszweig andererseits. In dem hydrostatischen Leistungszweig befindet sich ein hydrostatisches Getriebe, in dem mechanischen Leistungszweig ein Drehrichtungswandler mit einer ersten und zweiten Kupplung zur Änderung der Drehrichtung der Abtriebswelle. Die Anordnung ermöglicht es, den Ausgang des mechanischen Leistungszweigs mit der Leistung, die durch das hydrostatische Getriebe im hydraulischen Leistungszweig bereitgestellt wird, zusammenzuführen.

Vergleichbare Anordnungen gehen ebenfalls aus der DE 10 2008 015 276 A1 sowie der EP 1 626 206 A2 hervor.

Im Rahmen der Erfindung meint Schalteinheit stets die Kombination aus einem Antriebszahnrad und einem Abtriebszahnrad, wobei das Antriebs- und das Abtriebszahnrad miteinander in Eingriff stehen. Eine Schalteinheit kann jedoch auch weitere Bauteile umfassen.

Die zuvor beschriebenen Lastschaltgetriebe haben sich grundsätzlich in der Praxis bewährt. Sie sind jedoch verbesserungswürdig. Insbesondere stellt die Übertragung von Drehmomenten über den Drehmomentwandler eine relativ ineffiziente Drehmomentübertragung dar, sodass die Stufenlosigkeit zu einem gewissen Maße auf Kosten der Getriebeeffizienz geht.

Vor diesem Hintergrund liegt der vorliegenden Erfindung die Aufgabe zugrunde, ein Lastschaltgetriebe anzugeben, das sich einerseits durch eine verbesserte Getriebeeffizienz auszeichnet und das zum anderen leicht und kostengünstig produzierbar ist.

Diese Aufgabe wird gelöst durch ein Lastschaltgetriebe gemäß Patentanspruch 1. Dementsprechend weist das Lastschaltgetriebe eine Eingangs- und eine parallel dazu angeordnete Ausgangswelle auf, wobei eine Verzweigungseinheit auf der Eingangswelle angeordnet ist, über die ein auf die Eingangswelle wirkendes Drehmoment auf zwei Leistungspfade zur Drehmomentübertragung aufteilbar ist, wobei in dem ersten Leistungspfad eine zumindest zwei Schaltstufen aufweisende Schaltgruppe und in dem zweiten Leistungspfad ein Drehmomentwandler angeordnet ist, wobei über die Schaltgruppe und über den Drehmomentwandler ein Drehmoment von der Eingangs- auf die Ausgangswelle übertragen werden kann. Erfindungsgemäß ist die Ausgangswelle aus einer ersten und einer zweiten Ausgangswelleneinheit gebildet, die über eine Kupplung miteinander in Verbindung stehen, wobei die Schaltgruppe ein Drehmoment auf die erste Ausgangswelleneinheit und der Drehmomentwandler ein Drehmoment auf die zweite Ausgangswelleneinheit übertragen kann.

Mit anderen Worten ist die Ausgangswelle nicht einteilig, sondern zweiteilig ausgebildet, sodass sich eine erste und eine zweite Ausgangswelleneinheit ausbildet, die bevorzugt koaxial zueinander ausgerichtet sind.

Der Drehmomentwandler ist bevorzugt derart ausgebildet, dass der zweite Leistungspfad einen nicht-mechanischen Leistungspfad darstellt. Somit erfolgt sowohl über den mechanischen ersten Leistungspfad als auch über den zweiten nicht-mechanischen Leistungspfad eine Drehmomentübertragung von der Eingangswelle auf die Ausgangswelle.

Durch eine solche Ausgestaltung ist es möglich, dass die einzelnen Leistungspfade voneinander getrennt werden können, wobei der zweite Ausgangswellenabschnitt bevorzugt den Teil der Ausgangswelle darstellt, an den entsprechende Maschinen angeschlossen und betrieben werden können. Durch Öffnung der Kupplung wird der erste Leistungspfad getrennt, sodass lediglich eine Drehmomentübertragung über den zweiten nicht-mechanischen Leistungspfad und damit über den Drehmomentwandler erfolgt. Eine solche Drehmomentübertragung ist zwar grundsätzlich nicht besonders effektiv. Es lässt sich aber in einfacher Art und Weise eine Reversiereinheit integrieren. Hierzu wird die Kupplung einerseits geöffnet und zugleich zumindest zwei Schalteinheiten zugekoppelt. Durch die Zuschaltung von zwei Schalteinheiten wird eine Drehmomentübertragung zwischen dem ersten Ausgangswellenabschnitt und der Eingangswelle blockiert, sodass entsprechend bei einer Ausgestaltung als Planetenstufe, die Verzweigungseinheit keine Drehung an dem Hohlrad aufweist. Demnach wird die gesamte Antriebsleistung von der Eingangswelle an die erste Maschine übermittelt, wobei diese dann die Leistung entweder in elektronischer oder in hydraulischer Art und Weise an die zweite Maschine überträgt. Die zweite Maschine bewirkt sodann eine Übertragung der Antriebsleistung auf den zweiten Ausgangswellenabschnitt.

Die beiden Leistungspfade sind dementsprechend parallel zueinander geschaltet, sodass grundsätzlich auch nur einer der beiden Leistungspfade notwendig wäre, um das Drehmoment zu übertragen. Durch die Kombination beider Übertragungsarten können jedoch die Vorteile beider Übertragungsarten ergänzt werden, wobei sich eine mechanische Drehmomentübertragung über eine Schaltgruppe mit Antriebs- und Abtriebszahnrädern durch ein hohes Maß an Effizienz und eine nicht-mechanische Drehmomentübertragung durch ein hohes Maß an Variabilität auszeichnet. So kann der Drehmomentwandler beispielsweise derart betrieben werden, dass während dem Schalten einer der Schalteinheiten der Schaltgruppe der Drehmomentwandler die Drehgeschwindigkeiten innerhalb des Lastschaltgetriebes so anpasst, dass der Schaltvorgang nicht zu einer abrupten Drehzahländerung der Eingangswelle führt.

Dennoch soll die mechanische Drehmomentübertragung über den ersten Leistungspfad mit der Schaltgruppe den Hauptleistungspfad darstellen, sodass bevorzugt ein größerer Leistungsanteil über den ersten Leistungspfad als über den zweiten Leistungspfad übertragen wird.

Die Aufteilung des Drehmoments steht vorzugsweise in einem fixen Verhältnis und richtet sich nur nach der Auswahl der gewählten Technologie. Als vorteilhaft erweist es sich, wenn maximal 30% der maximalen Getriebeeingangsleistung über den Drehmomentwandler übertragen werden. Bei kleinen Geschwindigkeiten (0 - 6 km/h) wird vorzugsweise 100%-30% der Getriebeeingangsleistung über den Drehmomentwandler übertragen. Bevorzugt ist die übertragbare Leistung in diesem Bereich auf weniger als 30% der maximalen Getriebeeingangsleistung aufgrund von Traktionslimitierungen begrenzt.

Der Drehmomentwandler kann sowohl hydraulisch als auch elektrisch ausgebildet sein, wobei unabhängig von der speziellen Art, der Drehmomentwandler zumindest eine erste und eine mit der ersten Maschine in Wirkverbindung stehende zweite Maschine aufweist. Im Falle einer hydraulischen Ausgestaltung handelt es sich bei den Maschinen um hydraulisehe Maschinen, die entweder in Form einer Hydraulikpumpe oder in Form eines Hydraulikmotors fungieren können. Im Falle einer elektrischen Ausgestaltung handelt es sich bei den Maschinen um elektrische Maschinen, wobei dann bevorzugt eine der Maschinen als Generator und die andere als Elektromotor ausgebildet ist. Grundsätzlich können beide Maschinen gleich ausgebildet sein, wobei deren genaue Funktion abhängig von dem eingestellten Betriebsmodus ist. Sofern die Maschinen elektrische Maschinen sind, ist zwischen den beiden Maschinen eine Steuereinheit vorgesehen, die beispielsweise eine Regeleinheit und/oder eine Batterie umfassen kann.

Ein so ausgebildetes Lastschaltgetriebe kann bei Verwendung von zwei elektrischen oder hydraulischen Maschinen beispielsweise derart betrieben werden, dass die erste Maschine das Drehmoment hinter der Verzweigungseinheit aus dem zweiten Leistungspfad abgreift und die durch das Drehmoment erzeugte Leistung über eine Ausbildung als Generator in elektrischen Strom umwandelt. Im Falle einer hydraulischen ersten Maschine würde die erste Maschine dann eine gewisse Menge an Hydrauliköl unter einem bestimmten Druck fördern. Somit wäre dann die erste Maschine als Hydraulikpumpe ausgebildet. In beiden Fällen könnte entweder der elektrische Strom oder die Hydraulikflüssigkeit an die zweite Maschine übertragen werden, wobei sowohl die Menge der Hydraulikflüssigkeit als auch der elektrische Strom gezielt eingestellt bzw. geregelt würde. Der elektrische Strom bzw. die Hydraulikflüssigkeit betreibt dann die zweite elektrische oder hydraulische Maschine und überträgt so das Drehmoment auf die Ausgangswelle. Über die Regelung des Stromdurchflusses bzw. über die Einstellung der geförderten Hydraulikmenge kann sodann das zu übertragende Drehmoment gezielt eingestellt werden. Hierdurch ist es möglich, zwischen den einzelnen Schaltstufen aus dem mechanischen ersten Leistungspfad eine Stufenlosigkeit bzw. einen stufenlosen Übergang zwischen den einzelnen mechanischen Schaltstufen zu bewirken.

Alternativ kann bei einer solchen Ausgestaltung auch die Drehzahl der Komponenten so angepasst werden, dass bei einem Schaltvorgang des Lastschaltgetriebes die Getriebeeingangswelle die Drehzahl nicht ändert und dadurch der Schaltvorgang nicht durch einen Ruck spürbar wäre, da in diesem Fall die erste unmittelbar hinter der Verzweigungseinrichtung vorgesehene Maschine gezielt die Drehzahl der Bauteile aus dem zweiten Leistungspfad anpassen würde.

Eine solche Betriebsweise ist vor allem dann sinnvoll, wenn die Verzweigungseinheit über eine Planetenstufe gebildet wird. Eine solche Planetenstufe setzt sich aus einem zentralen Sonnenrad, das Sonnenrad umrundende und auf einem Planetenträger angeordneten Planeten und einem die Planeten umschließenden Hohlrad zusammen. Sowohl das Sonnenrad als auch der Planetenträger und das Hohlrad sind dazu geeignet, einzeln betrieben zu werden. Bevorzugt ist die Eingangswelle unmittelbar mit dem Planetenträger verbunden, sodass das Antriebsdrehmoment einzig über den Planetenträger in die Leistungsverzweigungseinheit eingeht. Die Leistungspfade werden hingegen angetrieben über das Hohlrad und das Sonnenrad, wobei bevorzugt das Sonnenrad der Planetenstufe mit dem zweiten Leistungspfad und das Hohlrad mit dem ersten Leistungspfad in Verbindung stehen.

Bei einer solchen Ausgestaltung ist es möglich, die Drehzahl des Sonnenrades so anzupassen, dass die Drehzahl der Eingangswelle sich nicht ändert.

Die Schaltgruppe ist bevorzugt derart ausgebildet, dass die Schalteinheiten jeweils aus einem Antriebszahnrad und einem mit dem Antriebszahnrad in Eingriff stehenden Abtriebszahnrad bestehen, wobei die Antriebszahnräder der Schaltgruppe auf der Eingangswelle und die Abtriebszahnräder der Schaltgruppe auf der Ausgangswelle angeordnet sind. Darüber hinaus ist jeder Schalteinheit bevorzugt eine einzelne Kupplung zugeordnet, über die die einzelnen Schalteinheiten zu- oder abgekoppelt werden können.

Mit Zu- bzw. Abkoppeln der Schalteinheiten ist im Rahmen dieser Erfindung gemeint, dass durch Betätigen der Kupplung ein Drehmoment über das Antriebs- und das Abtriebszahnrad von der Eingangswelle auf die Ausgangswelle übertragen werden kann. Sofern die Kupplung nicht betätigt wird, erfolgt keine entsprechende Drehmomentübertragung. Die Kupplungen sind bevorzugt als Lamellenkupplungen ausgebildet und entweder an dem Antriebszahnrad auf der Eingangswelle oder an dem Abtriebszahnrad auf der Ausgangswelle angeordnet.

In einer bevorzugten Ausgestaltung der Erfindung sind die Antriebszahnräder der Schaltgruppe und/oder die Abtriebszahnräder der Schaltgruppe auf einem Außenwellenabschnitt angeordnet, wobei die Außenwellenabschnitte der Antriebszahnräder die Eingangswelle und die Außenwellenabschnitte der Abtriebszahnräder die Ausgangswelle umfangseitig umschließen. Es handelt sich daher bei den Außenwellenabschnitten um Hohlwellen, die die entsprechende Eingangs- oder Ausgangswelle drehbar umschließen. Demnach kann eine Zukopplung beispielsweise derart erfolgen, dass mittels einer Kupplung die jeweiligen Außenwellenabschnitte der Abtriebszahnräder mit der Ausgangswelle gekuppelt werden. Hierdurch erfolgt eine Drehmomentübertragung über die Abtriebszahnräder auf die Ausgangswelle.

Im Hinblick auf die Antriebszahnräder ergibt sich die Besonderheit, dass neben den Außenwellenabschnitten bevorzugt eine hohle Übertragungswelle vorgesehen ist, die ebenfalls die Eingangswelle umfangseitig umschließt und die unmittelbar in radialer Richtung an die Eingangswelle anschließt. Diese Übertragungswelle ist in dem ersten Leistungspfad angeordnet und schließt entsprechend an die Verzweigungseinheit an. Sofern die Verzweigungseinheit als Planetenstufe ausgebildet ist, ist die Übertragungswelle mit dem Hohlrad der Planetenstufe verbunden. Die Eingangswelle und die Übertragungswelle können nicht miteinander gekoppelt werden, sodass sich für die Eingangswelle auf der einen Seite und für die Übertragungswelle auf der anderen Seite sowohl andere Drehzahlen als auch andere Drehmomente ergeben können.

Um eine Zuschaltung der Schalteinheiten an den Antriebszahnrädern gewährleisten zu können, sind die jeweiligen Außenwellenabschnitte derart angeordnet, dass sie sowohl die Eingangswelle als auch die Übertragungswelle umfangseitig umschließen. Somit erfolgt eine Kopplung zwischen den Außenwellenabschnitten der Antriebszahnräder und der Übertragungswelle.

Durch die Übertragungswelle in dem ersten Leistungspfad und durch den Drehmomentwandler in dem zweiten Leistungspfad können die Drehgeschwindigkeiten aller Komponenten, die sich zwischen der Eingangswelle und der Ausgangswelle befinden, einzeln angepasst werden, sodass sich der bereits zuvor beschriebene Effekt eines Schaltrucks vermeiden lässt.

Die erste Maschine des Drehmomentwandlers schließt bevorzugt nicht unmittelbar an die Verzweigungseinheit bzw. an das Sonnenrad einer als Planetenstufe ausgebildeten Verzweigungseinheit an, sondern über ein Zahnradpaar, wobei das Zahnradpaar sowohl eine Übersetzung als auch eine Untersetzung bewirken kann.

Unabhängig von dem speziellen Betriebsmodus kann es zweckmäßig sein, dass die zweite Maschine nicht unmittelbar eine Drehmomentübertragung auf die Ausgangswelle bzw. auf den zweiten Ausgangswellenabschnitt bewirkt, sondern durch Zwischenschaltung zumindest eines Zahnradpaares. Dieses Zahnradpaar kann entweder eine Unter- oder eine Übersetzung bewirken. Um sich an unterschiedliche Lastzustände besser anpassen zu können, kann es zweckmäßig sein, dass mehr als zwei Zahnradpaare, z. B. drei Zahnradpaare, vorgesehen sind, die sich hinsichtlich ihres Unter- bzw. Übersetzungsverhältnisses voneinander unterscheiden.

Vorzugsweise bildet eine erfindungsgemäße Ausgestaltung ein optionales Getriebe. Dieses muss nicht lastschaltbar ausgeführt sein. Die Schaltung erfolgt vorzugsweise, wenn 100% der Leistung mechanisch übertragen wird, also die zweite Maschine ohne Leistung ist. Dadurch hat diese Schaltstelle keinen negativen Einfluss.

Im Folgenden wird die Erfindung anhand von lediglich Ausführungsbeispielen zeigenden Figuren erläutert. Es zeigen:
- Figur 1: eine schematische Darstellung einer landwirtschaftlichen Arbeitsmaschine,
- Figur 2: eine schematische Darstellung des erfindungsgemäßen Lastschaltgetriebes,
- Figur 3: eine Prinzipskizze einer möglichen Ausgestaltung des erfindungsgemäßen Last-schaltgetriebes.

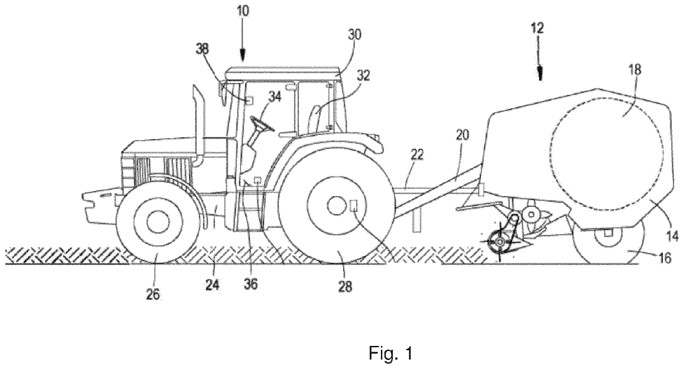

Figur 1 zeigt eine landwirtschaftliche Arbeitsmaschine in Form eines Traktors 10 und eines vom Traktor gezogenen beliebigen Gerätes 12, das im Ausführungsbeispiel rein exemplarisch als Rundballenpresse ausgeführt ist. Das Gerät 12 umfasst ein auf Rädern 16 abgestütztes Fahrgestell 14 mit einer Ballenbildungskammer 18. Das Gerät 12 wird über eine Deichsel 20 vom Traktor 10 gezogen. Ihre antreibbaren Elemente werden mittels einer Zapfwelle 22 vom Traktor 10 angetrieben.

Der Traktor 10 umfasst ein Fahrgestell 24, das sich auf vorderen, lenkbaren Rädern 26 und rückwärtig angetriebenen Rädern 28 abstützt. Ein Bedienerarbeitsplatz mit einem Sitz 32 befindet sich in einer Kabine 30. Vom Sitz aus sind ein Lenkrad 34, ein Gaspedal 36 und eine Bedienerstelle 38 betätigbar.

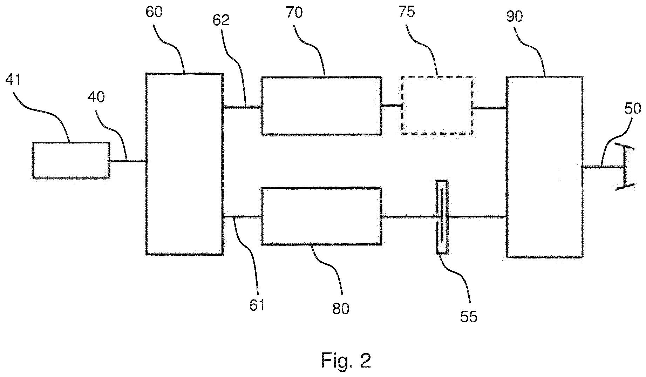

Die Figur 2 zeigt eine schematische Darstellung des erfindungsgemäßen Lastschaltgetriebes, wobei ein Antriebsmotor 41 eine Antriebswelle 40 antreibt. Über eine Verzweigungseinheit 60 wird die über die Antriebswelle eingebrachte Antriebsleistung auf einen ersten Leistungspfad 61 und einen zweiten Leistungspfad 62 aufgeteilt, wobei der erste Leistungspfad 61 als ein mechanischer Leistungspfad ausgebildet ist, über den ein Drehmoment von der Antriebswelle 40 auf die Abtriebswelle 50 übertragen werden kann. Hierzu ist eine Schaltgruppe 80 vorgesehen. Der erste Leistungspfad 61 weist darüber hinaus eine Kupplung 55 auf, über die der zweite Leistungspfad 61 derart entkoppelt werden kann, dass keine Drehmomentübertragung auf die Ausgangswelle 50 möglich ist.

Der zweite Leistungspfad 62 ist nicht-mechanisch ausgebildet und weist hierzu einen Drehmomentwandler 70 auf, über den ein Drehmoment entweder in elektrischer oder in hydraulischer Art und Weise auf die Ausgangswelle 50 übertragen werden kann. Möglich ist ferner der Einsatz eines oder mehreren unter- oder übersetzten Zahnradpaaren 75, über die das von dem Drehmomentwandler 70 übertragene Drehmoment entsprechend unter- oder übersetzt werden kann.

Zur Vereinigung der beiden Leistungspfade 61 und 62 ist ferner eine Kombinationseinheit 90 vorgesehen, welche die Leistungen aus dem ersten mechanischen Leistungspfad 61 und aus dem zweiten nicht-mechanischen Leistungspfad 62 auf die Ausgangswelle 50 überträgt.

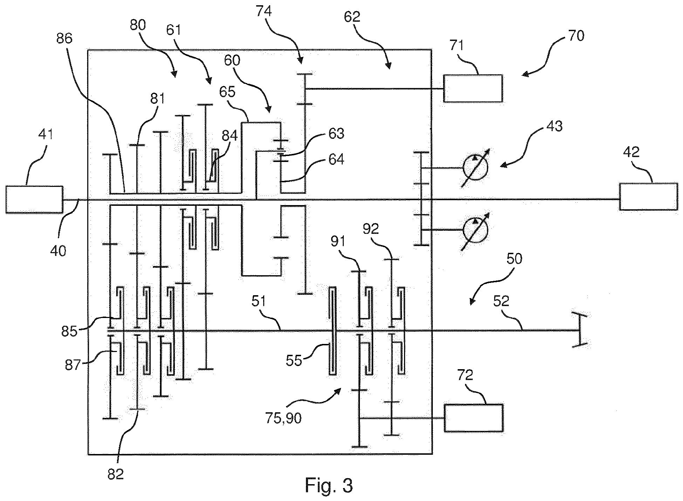

Die Figur 3 zeigt eine exemplarische Ausgestaltung des erfindungsgemäßen Lastschaltgetriebes. Der Antriebsmotor 41 überträgt ein Drehmoment bzw. eine Antriebsleistung auf die Eingangswelle 40. Auf der Eingangswelle 40 ist eine Verzweigungseinheit 60 angeordnet, die in dem gezeigten Beispiel als Planetenstufe ausgebildet ist. Dementsprechend weist die Verzweigungseinheit 60 ein Sonnenrad 64, mehrere auf einem Planetenträger 63 angeordnete Planeten und ein Hohlrad 65 auf, wobei die Planeten zwischen dem Sonnenrad 64 und dem Hohlrad 65 angeordnet sind. Die Eingangswelle 40 ist unmittelbar mit dem Planetenträger 63 verbunden und stellt die einzige Quelle dar, über die ein Drehmoment bzw. über die eine Antriebsleistung von dem Antriebsmotor 41 an die Verzweigungseinheit 60 übertragen werden kann.

Das Sonnenrad 64 und das Hohlrad 65 bilden die Ausgangspunkte für den ersten Leistungspfad 61 und den zweiten Leistungspfad 62, wobei der erste Leistungspfad 61 mit dem Hohlrad 65 und der zweite Leistungspfad 62 mit dem Sonnenrad 64 in Verbindung steht. Ausgehend von dem Hohlrad 65 wird das über den ersten Leistungspfad 61 geführte Drehmoment bzw. die über den ersten Leistungspfad 65 übertragene Leistung an eine Übertragungswelle 86 übermittelt. Die Übertragungswelle 86 ist hohlförmig ausgebildet und umschließt unmittelbar die Eingangswelle 40 in einer drehbaren Art und Weise. Hierdurch ist es möglich, dass die Eingangswelle 40 und die Übertragungswelle 86 unterschiedliche Drehgeschwindigkeiten aufweisen können.

Zwischen der Übertragungswelle 86 und der Ausgangswelle 50 ist eine Schaltgruppe 80 vorgesehen, über die das Drehmoment von der Übertragungswelle 86 auf die Ausgangswelle 50 übertragen werden kann. Hierzu sind Antriebszahnräder 81 auf der Übergangswelle 86 und Abtriebszahnräder 82 auf der Ausgangswelle 50 angeordnet. Jede Kombination aus einem Antriebszahnrad 81 und einem Abtriebszahnrad 82 bildet eine Schalteinheit 84, wobei die Antriebszahnräder 81 und die Abtriebszahnräder 82 einer Schalteinheit 84 miteinander in Eingriff stehen. Bei dem gezeigten Beispiel sind insgesamt fünf Schalteinheiten 84 vorgesehen, die sich hinsichtlich ihres Unter- bzw. Übersetzungsverhältnisses voneinander unterscheiden, sodass allein durch die Schaltgruppe 80 insgesamt fünf verschiedene Schaltzustände eingestellt werden können. Es liegt aber auch im Rahmen der Erfindung, dass eine geringere oder eine größere Anzahl von Schalteinheiten 84 vorgesehen sein kann.

Zur Schaltung der einzelnen Schalteinheiten 84 ist jeder Schalteinheit 84 eine separate Kupplung 87 zugeordnet, wobei eine zugekoppelte Schalteinheit 84 bedeutet, dass ein Drehmoment bzw. dass eine Antriebsleistung über diese Schalteinheit 84 übertragen werden kann. Um eine Übertragung zu gewährleisten, ist es hierbei wesentlich, dass nur eine Schalteinheit 84 betätigt wird.

Zur Kopplung weist jede Schalteinheit 84 entweder an dem Antriebszahnrad 81 oder an dem Abtriebszahnrad 82 einen Außenwellenabschnitt 84, 85 auf, der entweder die Ausgangswelle 51 oder die Übertragungswelle 86 in Umfangsrichtung umschließt. Durch Betätigung einer der Kupplungen 87 wird dementsprechend eine drehfeste Verbindung entweder zwischen der Übertragungswelle 86 und dem Außenwellenabschnitt 84 oder zwischen dem Außenwellenabschnitt 85 und der Ausgangswelle 50 geschaffen.

Die Ausgangswelle 50 ist ferner in zwei Ausgangswelleneinheiten 51, 52 unterteilt, die koaxial zueinander ausgerichtet sind und über eine Kupplung 55 miteinander in Verbindung stehen. Es erfolgt somit eine unmittelbare Übertragung des Drehmomentes bzw. der Antriebsleistung von der ersten Ausgangswelleneinheit 51 auf die zweite Ausgangswelleneinheit 52, wobei es auch grundsätzlich im Rahmen der Erfindung liegt, dass zwischen den beiden Ausgangswelleneinheiten 51, 52 ein zusätzliches Zahnradpaar angeordnet ist, über die eine Unter- bzw. Übersetzung zwischen den beiden Ausgangswelleneinheiten 51, 52 realisiert wird. Die Abtriebszahnräder 82 sind zusammen mit den Ausgangswellenabschnitten 85 und den zugeordneten Kupplungen 87 auf der ersten Ausgangswelleneinheit 51 angeordnet.

Durch Lösen der Kupplung 55 werden die beiden Ausgangswelleneinheiten 51, 52 voneinander getrennt, sodass keine Kombination der beiden Leistungspfade 61, 62 mehr möglich ist. Demnach wird das Drehmoment über den zweiten Leistungspfad 62 auf die zweite Ausgangswelleneinheit 52 übertragen. Hierzu ist zunächst ein Zahnradpaar 74 auf der Eingangswelle 40 angeordnet, welches unmittelbar mit dem Sonnenrad 64 der Verzweigungseinheit 60 in Verbindung steht. Über das Zahnradpaar 74 kann wiederum eine Über- bzw. Untersetzung erreicht werden, wobei das Antriebszahnrad des Zahnradpaares 74 auf der Eingangswelle angeordnet und gegenüber der Eingangswelle drehbar ausgebildet ist. Das Abtriebszahnrad ist über eine separate Welle mit einer ersten Maschine 71 des Drehmomentwandlers 70 verbunden. Die erste Maschine 71 kann entweder als elektrische oder hydraulische Maschine ausgebildet sein. Zugleich kann es ein zusätzliches Drehmoment auf das Zahnradpaar 74 und damit auf das Sonnenrad 64 ausüben. In diesem Fall würde die elektrische Maschine 71 als Elektromotor bzw. als Hydraulikmotor fungieren. Alternativ kann die erste Maschine 71 auch ein von dem Sonnenrad 64 ausgehendes Drehmoment bzw. eine von dem Sonnenrad 64 ausgehende Leistung aufnehmen. In diesem Fall würde die erste Maschine 71 als elektrischer Generator oder als Hydraulikpumpe ausgebildet sein.

Die erste Maschine 71 steht mit der zweiten Maschine 72 in einer Wirkverbindung, wobei beide Maschinen 71, 72 gleichzeitig entweder als elektrische Maschine oder als hydraulische Maschine ausgebildet sind. Sofern die Maschinen 71, 72 als elektrische Maschinen ausgebildet sind, kann ein Strom von der ersten Maschine 71 auf die zweite Maschine 72 oder umgekehrt übertragen werden, wobei zwischen den beiden Maschinen 71, 72 weitere elektronische Komponenten, wie z. B. eine Leistungselektronik oder ein Akku vorgesehen sein können. Im Falle einer Ausbildung als hydraulische Maschinen ist zwischen den beiden Maschinen 71, 72 zumindest ein Hydraulikschlauch vorgesehen, über den Hydraulikflüssigkeit unter einem bestimmten Druck zwischen den beiden Maschinen 71, 72 transportiert werden kann.

Sofern die erste Maschine 71 ein Drehmoment bzw. eine Leistung von dem Sonnenrad 64 der Verzweigungseinheit 60 aufnimmt, erfolgt somit eine Übertragung auf die zweite Maschine 72, wobei die Leistung über entsprechende Regelungsmaßnahmen eingestellt werden kann.

Die zweite Maschine 72 ist sodann über zwei Zahnradpaare 91, 92 mit der zweiten Ausgangswelleneinheit 52 verbunden, wobei die beiden Zahnradpaare 91, 92 jeweils aus einem Antriebs- und einem Abtriebszahnrad bestehen und unterschiedliche Übersetzungs- bzw. Untersetzungsverhältnisse darstellen. Somit wird das Drehmoment zwischen der zweiten elektrischen Maschine 72 und der zweiten Ausgangswelleneinheit 52 nicht unmittelbar übertragen, sondern über die beiden Zahnradpaare 91, 92 entsprechend angepasst. Die beiden Zahnradpaare 91, 92 sind hierbei parallel zueinander angeordnet und stellen demnach zwei mögliche Schaltzustände dar, die aber nicht gleichzeitig geschaltet werden können.

Die Zahnradpaare 91, 92 stellen somit zum einen eine weitere Unter- bzw. Übersetzungsmöglichkeit dar und sind zugleich aber auch eine Kombinationseinheit 90, über die die beiden Leistungspfade 61, 62 zusammengeführt werden.

An der Eingangswelle 40 können darüber hinaus noch zusätzliche Maschinen 42, 43 vorgesehen sein, die entweder unmittelbar an die Eingangswelle 40 oder über entsprechende Zahnradpaare in einer unter- bzw. übersetzten Art und Weise anschließen.

Die bereits zuvor beschriebene Kupplung 55, die die beiden Ausgangswelleneinheiten 51, 52 miteinander verbindet, ist im Vorwärtsmodus stets geschlossen. Die einzelnen Schalteinheiten 84 stellen unterschiedliche Schaltstufen dar, sodass je nach Anzahl der Schalteinheiten über den ersten mechanischen Leistungspfad 61 bestimmte diskrete Schaltzustände eingestellt werden können. Eine solche Drehmomentübertragung ist besonders effizient, wobei aber eine rein mechanische Drehmomentübertragung keine stufenlose Schaltung ermöglicht.

Die Zwischenbereiche werden daher durch den nicht-mechanischen zweiten Leistungspfad 62 bereitgestellt, sodass eine besonders vorteilhafte Kombination aus mechanischen und nicht-mechanischen Leistungspfaden 61, 62 herausgebildet wird.

Sofern mit dem Lastschaltgetriebe eine Rückwärtsfahrt ermöglicht werden soll, wird die Kupplung 55 geöffnet und zumindest zwei der Schalteinheiten 84 geschaltet. Durch die unterschiedlichen Unter- bzw. Übersetzungsverhältnisse der Schalteinheiten 84 kann kein Drehmoment wirksam auf die zweite Ausgangswelleneinheit 51 übertragen werden, da eine Rotation der Ausgangswelleneinheit 51 nicht möglich ist. Demnach führen die beiden zugeschalteten Schalteinheiten 84 zu einer Blockierung des ersten mechanischen Leistungspfades 51.

Durch die Entkopplung der Kopplung 55 kann jedoch der zweite Leistungspfad weiter betrieben werden, wobei das Hohlrad 65 der Verzweigungseinheit 60 nunmehr einen feststehenden Teil der Planetenstufe bildet. Hierdurch wird die Antriebsleistung des Antriebsmotors 41 nur über den zweiten Leistungspfad 62 bzw. über das Sonnenrad 64, das Zahnradpaar 64 sowie die beiden Maschinen 71, 72 und die Zahnradpaare 91, 92 auf die zweite Ausgangswelleneinheit 52 übertragen. Es erfolgt demnach eine reine nicht-mechanische Leistungsübertragung von der Antriebswelle 40 auf die Ausgangswelle 50 bzw. auf die zweite Ausgangswelleneinheit 52. Eine derartige Leistungsübertragung wird auch als seriell-hybride Leistungsübertragung bezeichnet.

## Patentansprüche

1. Lastschaltgetriebe, insbesondere stufenlos schaltbares Lastschaltgetriebe, mit einer Eingangs- und einer parallel dazu angeordneten Ausgangswelle (40, 50), wobei eine Verzweigungseinheit (60) auf der Eingangswelle (40) angeordnet ist, über die ein auf die Eingangswelle (40) wirkendes Drehmoment auf zwei Leistungspfade (61, 62) zur Drehmomentübertragung aufteilbar ist, wobei in dem ersten Leistungspfad (61) eine zumindest zwei Schaltstufen aufweisende Schaltgruppe (80) und in dem zweiten Leistungspfad (62) ein Drehmomentwandler (70) angeordnet ist, wobei über die Schaltgruppe (80) und über den Drehmomentwandler (70) ein Drehmoment von der Eingangs- auf die Ausgangswelle (40, 50) übertragen werden kann, **dadurch gekennzeichnet, dass** die Ausgangswelle (50) aus einer ersten und einer zweiten Ausgangswelleneinheit (51, 52) gebildet ist, die über eine Kupplung (55) miteinander in Verbindung stehen, wobei die Schaltgruppe (80) ein Drehmoment auf die erste Ausgangswelleneinheit (51) und der Drehmomentwandler (70) ein Drehmoment auf die zweite Ausgangswelleneinheit (52) übertragen kann.

2. Lastschaltgetriebe nach Anspruch 1, wobei der Drehmomentwandler (70) eine erste Maschine (71) und eine mit der ersten Maschine (71) in Wirkverbindung stehende zweite Maschine (72) aufweist.

3. Lastschaltgetriebe nach Anspruch 2, wobei die erste und die zweite Maschine (71, 72) entweder elektrische oder hydraulische Maschinen sind.

4. Lastschaltgetriebe nach einem der Ansprüche 1 bis 3, wobei die Schaltzustände über Schalteinheiten 84 realisiert sind, die jeweils aus einem Antriebs- und einem damit in Eingriff stehenden Abtriebszahnrad (81, 82) bestehen, wobei die Antriebszahnräder (81) der Schaltgruppe (80) auf der Eingangswelle (40) und die Abtriebszahnräder (82) der Schaltgruppe (80) auf der Ausgangswelle (50) angeordnet sind.

5. Lastschaltgetriebe nach Anspruch 4, wobei eine Übertragungswelle (86) in einem zweiten Leistungspfad (62) vorgesehen ist, die die Eingangswelle (40) umfangseitig umschließt, wobei Außenwellenabschnitte (84) auf der Übertragungswelle (86) und Antriebszahnräder (81) auf den Außenwellenabschnitten (84) angeordnet sind.

6. Lastschaltgetriebe nach Anspruch 4 oder 5, wobei jeder Schalteinheit (84) eine Kupplung (87) zugeordnet ist, über die die Schalteinheit (84) zu- oder abschaltbar ist.

7. Lastschaltgetriebe nach einem der Ansprüche 1 bis 6, wobei die Verzweigungseinheit (60) über eine Planetenstufe gebildet ist.

8. Lastschaltgetriebe nach Anspruch 7, wobei die Eingangswelle (40) mit einem Planetenträger (63) der Planetenstufe in Verbindung steht.

9. Lastschaltgetriebe nach Anspruch 7 oder 8, wobei der erste Leistungspfad (61) mit einem Hohlrad (65) und der zweite Leistungspfad (62) mit einem Sonnenrad (64) der Planetenstufe in Verbindung stehen.

10. Lastschaltgetriebe nach Anspruch 2 in Verbindung mit einem der Ansprüche 7 bis 9, wobei die erste Maschine (71) über ein Zahnradpaar (74) mit einem Sonnenrad (64) verbunden ist.

11. Lastschaltgetriebe nach Anspruch 2 in Verbindung mit einem der Ansprüche 7 bis 10, wobei die zweite Maschine (72) unmittelbar oder mittelbar über eine zumindest ein Zahnradpaar (91, 92) aufweisende Übertragungsschaltgruppe mit der Ausgangswelle (50) verbunden ist.

## Claims

1. Power shift transmission, in particular a steplessly switchable power shift transmission, having an input shaft (40) and, disposed parallel thereto, an output shaft (50), wherein a branching unit (60) by way of which a torque acting on the input shaft (40) for the transmission of torque is able to be divided among two power paths (61, 62) is disposed on the input shaft (40), wherein a switching group (80) which has at least two switching stages is disposed in the first power path (61), and a torque converter (70) is disposed in the second power path (62), wherein a torque can be transmitted from the input shaft (40) to the output shaft (50) by way of the switching group (80) and by way of the torque converter (70), **characterized in that** the output shaft (50) is formed from a first output shaft unit (51) and a second output shaft unit (52) which are connected to each other by way of a clutch (55), wherein the switching group (80) can transmit a torque to the first output shaft unit (51) and the torque converter (70) can transmit a torque to the second output shaft unit (52) .

2. Power shift transmission according to Claim 1, wherein the torque converter (70) has a first machine (71) and a second machine (72) which is operatively connected to the first machine (71).

3. Power shift transmission according to Claim 2, wherein the first machine (71) and the second machine (72) are either electric or hydraulic machines.

4. Power shift transmission according to one of Claims 1 to 3, wherein the switching states are implemented by way of switching units (84) which are in each case composed of a drive input gear wheel (81) and, engaging therewith, a drive output gear wheel (82), wherein the drive input gear wheels (81) of the switching group (80) are disposed on the input shaft (40), and the drive output gear wheels (82) of the switching group (80) are disposed on the output shaft (50) .

5. Power shift transmission according to Claim 4, wherein a transfer shaft (86) which circumferentially encloses the input shaft (40) is provided in a second power path (62), wherein outer shaft portions (84) are disposed on the transfer shaft (86), and drive input gear wheels (81) are disposed on the outer shaft portions (84).

6. Power shift transmission according to Claim 4 or 5, wherein each switching unit (84) is assigned a clutch (87) by way of which the switching unit (84) is able to be connected or disconnected.

7. Power shift transmission according to one of Claims 1 to 6, wherein the branching unit (60) is formed by way of a planetary stage.

8. Power shift transmission according to Claim 7, wherein the input shaft (40) is connected to a planet carrier (63) of the planetary stage.

9. Power shift transmission according to Claim 7 or 8, wherein the first power path (61) is connected to a ring gear (65) and the second power path (62) is connected to a sun gear (64) of the planetary stage.

10. Power shift transmission according to Claim 2 in conjunction with one of Claims 7 to 9, wherein the first machine (71) is connected to a sun gear (64) by way of a gear wheel pair (74).

11. Power shift transmission according to Claim 2 in conjunction with one of Claims 7 to 10, wherein the second machine (72) is connected directly to the output shaft (50) or indirectly by way of a transfer switching group having at least one gear wheel pair (91, 92) .

## Revendications

1. Boîte de vitesses commandée en charge, notamment boîte de vitesses commandée en charge commutable en continu, avec un arbre d'entrée et un arbre de sortie (40, 50) agencé parallèlement à celui-ci, une unité de ramification (60) étant agencée sur l'arbre d'entrée (40), par l'intermédiaire de laquelle un couple agissant sur l'arbre d'entrée (40) peut être réparti sur deux voies de puissance (61, 62) pour la transmission du couple, un groupe de commutation (80) présentant au moins deux étages de commutation étant agencé dans la première voie de puissance (61) et un convertisseur de couple (70) dans la deuxième voie de puissance (62), un couple pouvant être transmis de l'arbre d'entrée à l'arbre de sortie (40, 50) par l'intermédiaire du groupe de commutation (80) et par l'intermédiaire du convertisseur de couple (70), **caractérisée en ce que** l'arbre de sortie (50) est formé d'une première et d'une deuxième unité d'arbre de sortie (51, 52) qui sont en liaison entre elles par l'intermédiaire d'un embrayage (55), le groupe de commutation (80) pouvant transmettre un couple à la première unité d'arbre de sortie (51) et le convertisseur de couple (70) pouvant transmettre un couple à la deuxième unité d'arbre de sortie (52).

2. Boîte de vitesses commandée en charge selon la revendication 1, dans laquelle le convertisseur de couple (70) présente une première machine (71) et une deuxième machine (72) en liaison fonctionnelle avec la première machine (71).

3. Boîte de vitesses commandée en charge selon la revendication 2, dans laquelle la première et la deuxième machine (71, 72) sont des machines soit électriques, soit hydrauliques.

4. Boîte de vitesses commandée en charge selon l'une quelconque des revendications 1 à 3, dans laquelle les états de commutation sont réalisés par l'intermédiaire d'unités de commutation 84, qui sont chacune constituées d'une roue dentée d'entraînement et d'une roue dentée menée (81, 82) en prise avec celle-ci, les roues dentées d'entraînement (81) du groupe de commutation (80) étant agencées sur l'arbre d'entrée (40) et les roues dentées menées (82) du groupe de commutation (80) étant agencées sur l'arbre de sortie (50).

5. Boîte de vitesses commandée en charge selon la revendication 4, dans laquelle un arbre de transmission (86) est prévu dans une deuxième voie de puissance (62), qui entoure l'arbre d'entrée (40) sur sa circonférence, des sections d'arbre extérieur (84) étant agencées sur l'arbre de transmission (86) et des roues dentées d'entraînement (81) sur les sections d'arbre extérieur (84) .

6. Boîte de vitesses commandée en charge selon la revendication 4 ou 5, dans laquelle chaque unité de commutation (84) est associée à un embrayage (87) par l'intermédiaire duquel l'unité de commutation (84) peut être activée ou désactivée.

7. Boîte de vitesses commandée en charge selon l'une quelconque des revendications 1 à 6, dans laquelle l'unité de ramification (60) est formée par l'intermédiaire d'un étage planétaire.

8. Boîte de vitesses commandée en charge selon la revendication 7, dans laquelle l'arbre d'entrée (40) est en liaison avec un porte-satellites (63) de l'étage planétaire.

9. Boîte de vitesses commandée en charge selon la revendication 7 ou 8, dans laquelle la première voie de puissance (61) est en liaison avec une couronne (65) et la deuxième voie de puissance (62) est en liaison avec une roue solaire (64) de l'étage planétaire.

10. Boîte de vitesses commandée en charge selon la revendication 2 en liaison avec l'une quelconque des revendications 7 à 9, dans laquelle la première machine (71) est reliée à une roue solaire (64) par l'intermédiaire d'une paire de roues dentées (74).

11. Boîte de vitesses commandée en charge selon la revendication 2 en liaison avec l'une quelconque des revendications 7 à 10, dans laquelle la deuxième machine (72) est reliée directement ou indirectement à l'arbre de sortie (50) par l'intermédiaire d'un groupe de commutation de transmission présentant au moins une paire de roues dentées (91, 92) .
